Europäisches Patentamt

European Patent Office

Office européen des brevets

(11) Publication number: **0 082 126**
A1

(12) # EUROPEAN PATENT APPLICATION

(21) Application number: 82850256.7

(22) Date of filing: 10.12.82

(51) Int. Cl.³: **A 01 K 91/06**, A 01 K 79/00

(30) Priority: 15.12.81 NO 814277

(43) Date of publication of application: 22.06.83
Bulletin 83/25

(84) Designated Contracting States: **DE FR GB SE**

(71) Applicant: **O. MUSTAD & SON A.S**, Mustadsvej 1,
Lilleaker, Oslo 2 (NO)

(72) Inventor: **Kristoffersen, Bjarne, Iduns vej 18,
NO-2800 Gjovik (NO)**

(74) Representative: **Ryrlén, Evert et al, ALFONS HEDBERGS
PATENTBYRÄ AB** Aschebergsgatan 35,
S-411 33 Göteborg (SE)

(54) **Hook catcher assembly on a hauling apparatus for fishing line.**

(57) A hook catcher assembly (1) on a hauling apparatus for fishing line, comprising a hook guide (9) and a finger (10) which together with the guide (9) surrounds the line (6) for ensuring that the hooks (8) will be captured and oriented unidirectionally no matter what position they are introduced into the hook catcher.

The finger (10) and the hook guide (9) each comprise a semicircular body and together form a divided sleeve having an inside diameter which is less than the distance (B) between the shank and bowl of the hook (8). The finger (10) is arranged to be movable away from its normal position in opposition against a restoring force, thereby to permit the passage of any tangles/knots in the line (6, 7, 8).

Hook Catcher Assembly on a Hauling Apparatus
for Fishing Line

The present invention relates to a hook catcher assembly on a hauling apparatus for fishing line, of the type defined in the preamble of the appurtenant claim 1.

For a hook catcher to operate reliably and to be capable of capturing and uniformly orienting substantially all of the hooks on a fishing line which is being hauled on board a vessel, the hook catcher must surround the fishing line with so little clearance that the hooks which are being drawn through the catch assembly, no matter what the vertical orientation of the bowl of the hook, will be captured either by the hook guide or by the projecting finger which together form the hook catcher device. This means that the diameter of the passage formed between the hook guide and the finger must be less than the transverse distance between the shank of the hook and its tip. This ensures that when the shank of the hook lies against a section of the members defining the passage aperture, the tip of the hook will project outwardly beyond the opposing aperture-defining member, so that the bowl of the hook will catch on the lower edges of the members forming the passage, which consist of the above-mentioned hook guide and finger of the hook catcher assembly.

When the aperture of the passage is as narrow as described above, any tangles or knots in the line will not be able to pass through the hook catcher, since such

onstructions will usually have a larger diameter than the opening of the passage. This means that the hauling operation must be interrupted to disentangle the line. Such interruptions waste time, and in hard weather it can be very difficult and time-consuming to straighten out the line.

The object of the present invention is to provide a hook catcher assembly whereby the above drawback is avoided, so that the line can be hauled continuously whether it is tangled or not. Any tangles in the line can then be fixed later, when preparing to set the line.

This object is obtained in accordance with the invention by means of the features which are recited in the characterizing clause of the appurtnant claim 1 and the succeeding dependent claims.

An exemplary embodiment of the invention will be described in greater detail in the following with reference to the embodiment illustrated in the accompanying drawings, wherein

Figure 1 shows the hook catcher in perspective view, together with the hauling wheel for the line and the transfer means for transferring the hooks to a hook magazine (not shown),

Figures 2a and 2b, on a larger scale, show the combination finger and hook guide assembly, seen from the side and from the top, respectively, and

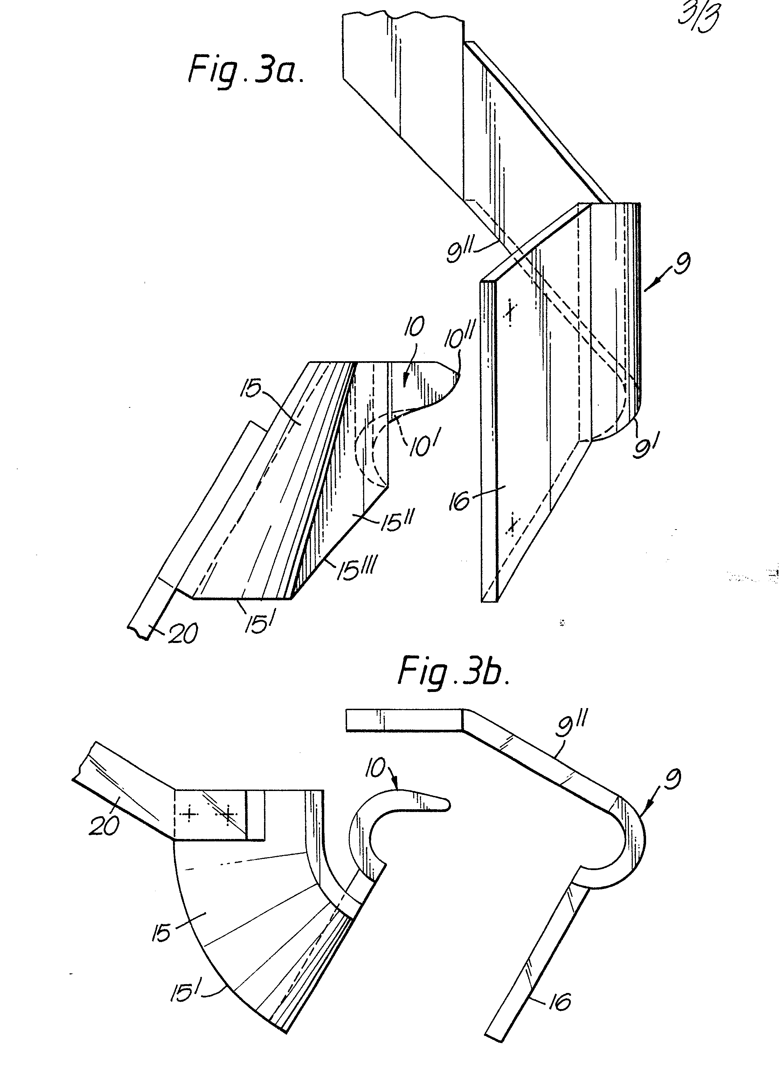

Figures 3a and 3b show the same members as Figure 2, in exploded view.

The hook catcher according to the invention constitutes a part of an apparatus for hauling fishing line. As the line is hauled in from the sea, the fish are removed from the hooks and the hooks may optionally be cleaned by brushes and water jets before passing into the hook catcher, where they are oriented unidirectionally and guided into a hook magazine for storage while the line is simultaneously coiled up below the hook magazine.

Several different types of apparatus for hauling fishing lines are known, and the hauling apparatus itself will not be discussed in greater detail here.

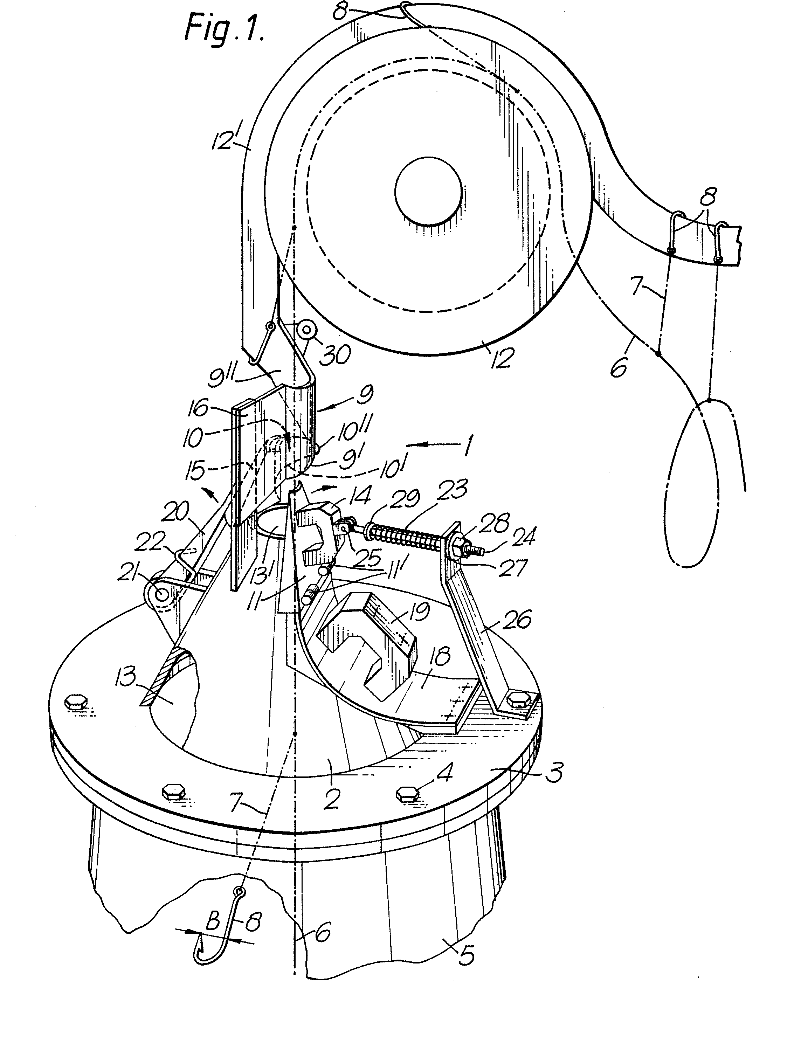

The hook catcher 1 as illustrated in Figure 1 consists of a hollow base member 2 fastened by means of a flange 3 and bolts 4 to a hollow cylinder 5 that is secured to the deck of the fishing vessel (not illustrated). The fishing line, which consists of a line 6 with snells 7 and hooks 8, enters the cylinder through an opening therein (not shown). The line is drawn up through the cylinder and the base member 2, passes through the hook catcher members 9 and 10 which will be described further below, and thereafter travels over a wheel 12 which transfers the line for coiling and introduces the hooks into a magazine (not shown).

The base member 2 forms an upwardly converging, funnel-shaped passageway 13 having an upper opening 13' restricted by a guide plate 11 with a magnet 14, said guide plate 11 constituting a wall section of the upper portion of the passage 13. One of the hook catcher members, the finger 10, is attached to a support member 15 at the upper opening 13' of the passage, and the other hook catcher member, the hook guide 9, is attached to the base member 2 by means of an arm or bracket 16.

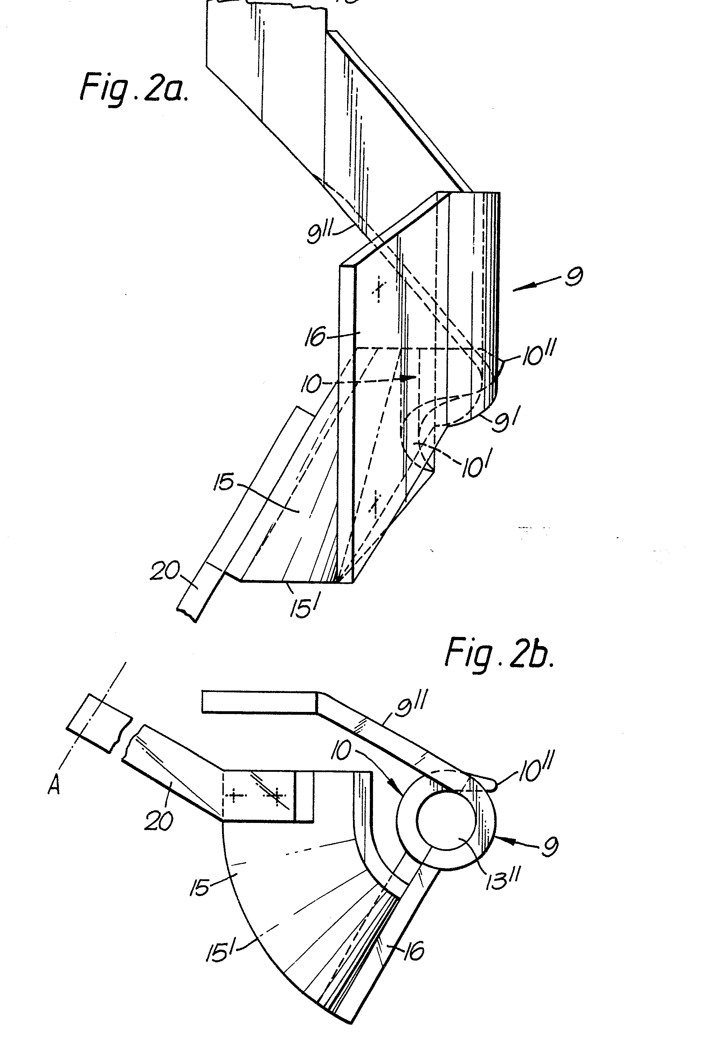

The hook guide 9 constitutes a semicircular sleeve member which is disposed in alignment with the funnel-shaped passage 13, immediately above the upper edge of the guide plate 11. The lower edge 9' of the hook guide 9 traces a helical path from the bottom and upwardly and continues via an extension 9" to a hook transfer member 12', which extends along a section of the periphery of the wheel 12 for the line and leads to a hook magazine (not illustrated). The hook guide 9 and the finger 10, which constitute two facing, semicircular sleeve members, form a ring or annular passage 13" (Figure 2b) for the line 6. The lower edge 10' of the finger also has a helical configuration, its path extending in the opposite direction in relation to the lower edge 9' of the hook guide 9. Thus, hooks 8 which are pulled through the hook catcher assembly by means of the line 6 and snells 7, will hook onto either the hook guide or the finger and will be turned in one direction or the other as they slide upwardly on the lower edges 9', 10' of said members into a uniformly oriented position on the extension 9" of the hook guide 9. From here, owing to the tension in the snells 7, the hooks will slide onto the hook transfer means 12' and pass further into a hook magazine (not shown). Normally, as the hooks are drawn into the hook catcher assembly, they will be drawn toward the guide plate 11 by the magnet 14 arranged in conjunction therewith, the magnetic attraction being reinforced by means of an additional plate 18 with a magnet 19 disposed on one side of the base member 2 below the guide plate 11. Most of the hooks will therefore be pulled up along the guide plate 11 with the tip of the hook facing to one side or the other, and will hook onto the hook guide 9 and be pulled up along its edge to pass onto the extension 9". In the event that the hooks 8 are not attracted to the guide plate 11 and guided upwardly thereby, they will be caught by the lower edge 10' of the finger 10 and turned into a correct position at the upper, outer tip 10" of the finger, which will then guide the bowl of the hook onto the extension 9" of the hook guide 9. In order for the hook catcher members 9 and 10 to operate in the manner described above, the diameter of the opening or ring 13" formed by these two members must be less than the transverse distance between the shank of the hook and its tip, so that no matter what the orientation of the hook 8, the tip of the hook will project outwardly beyond the lower edge of the finger 10 or the hook guide 9.

To permit any tangles in the line to pass through the narrow opening 13" between the hook catcher members 9 and 10, the support member 15 for the finger 10 is arranged to be pivotable on the base member 2 by means of an arm 20 hinged to the base member 2 by means of a bearing 21. Thus, the finger 10 on its support member 15 can be turned away from the hook guide 9 when a thicker portion of the line, in the form of a tangle or knot, is pulled into the hook catcher. Following the passage of the tangled portion of the line, the support member 15 with its finger 10 will be forced back into its normal operating position by means of a tension spring 22 arranged, e.g., in connection with the bearing 21.

As may be seen most clearly in Figure 2b, the outer tip 10" of the finger 10 projects outwardly beyond the lower edge 9' of the hook guide 9 to ensure that the bowl of the hook 8, which is guided along the lower edge 10' of the finger, will catch on the lower edge 9' of the hook guide and its extension 9" as it slides off the finger 10. This also prevents the line 6 from slipping out through the slot existing between the finger 10 and hook guide 9 if the line vibrates or moves somewhat transversely of the opening 13".

To permit the outer tip 10" of the finger 10 to project outwardly beyond the extension 9' of the hook guide 9 when the finger is pivoted away from the hook guide 9 to accommodate a knot in the line, the axis of pivot A of the finger - actually the bearing axis for the arm 20 - is disposed perpendicularly in relation to the extension 9". Thus, the line 6 will still be surrounded by the hook catcher members 9, 10 so that it cannot slip out through the slot between the members.

To facilitate the passage of any tangles or knots in the line through the hook catcher 1, the lower edge of the guide plate 11 is pivotally mounted to the base member 2 by means of a bearing 11', so that the plate can be pivoted to the side in opposition to a spring force. The spring force is provided by means of a helical spring 23 disposed on a rod 24 which is pivotally fastened via a hinge 25 provided, for example, on the magnet 14.

The other end of the rod 24 is provided with threads and is slidably supported in a bracket 26 fastened to the flange 3 of the base member 2. A washer 27 and nut 28 are provided on the end of the rod, outside the bracket 26. The ends of the spring 23 bear against the bracket 26 and a plate 29 attached to the rod, and thus force the guide plate 11 to assume its normal position. By means of the nut 28, the normal position of the guide plate can be regulated, i.e., the narrow upper edge of the plate can be brought into alignment with or be disposed interiorly of the lower edge 9' of the hook guide 9 to ensure that the shank of the hook will be pulled into the opening 13" as the line is being hauled in.

It is important that the line 6 passes centrally through the narrow opening 13" between the hook catcher members 9 and 10 so that the snells 7 can move as freely as possible between the line 6 and the inside surfaces of the opening 13", for instance as the snell unwinds from the line. Such central guidance of the line 6 is obtained by means of a guide pulley 30 disposed above the hook catcher members 9, 10, i.e., intermediate these members and the wheel 12. The guide pulley 30 may be arranged to be movable toward and away from the desired central path of the line 6 so that the position of the guide pulley can be adapted to varying line thicknesses 6 for guiding the line in the desired central path through the aperture 13" of the hook catcher.

The support member 15 for the finger 10 is formed as a curved plate - for example, as a section of a conical wall - and the lower, widest edge 15' thereof is spaced a distance apart from and surrounding a section of the outlet opening 13' of the passage 13, opposite the guide plate 11. Said edge 15' is preferably disposed somewhat lower than the outlet opening 13', so that the hooks 8 will not be caught thereon. The plate 15 forms a guide surface for tangles or knots in the line when the finger 10 is pivoted to the side.

A fastening plate 15" on one side of the support body, i.e., on the face of the plate 15 which carries the finger 10, has a lower edge 15"' which inclines upwardly and terminates in the helical edge 10' of the finger which catches and guides the hooks 8 onto the hook guide 9.

C l a i m s

1. A hook catcher assembly (1) on a hauling apparatus for fishing line, comprising a hook guide (9) disposed opposite the outlet opening (13') of a passage (13) for the line, said passage being provided with a guide plate (11) with a magnet (14) for attracting hooks (8) fastened to the line (6) by snells (7) and for guiding the hooks along the plate (11) to the hook guide (9) where they are oriented unidirectionally and transferred further via an extension thereof (9"), optionally via a line hauling wheel (12), to a hook magazine; and a finger (10) which together with the hook guide (9) surrounds the line (6) for ensuring that the hooks (8) become caught and oriented unidirectionally no matter what their position of introduction to the hook catcher assembly, c h a r a c t e r i z e d  i n  t h a t the finger (10) and hook guide (9) each comprise a semicircular body, which together form a divided sleeve (Figure 2) having an inside diameter less than the distance (B) between the shank and tip of the hook (8), and wherein the lower edge (10', 9') of each half of said sleeve constitutes an upwardly inclining catch and guide path for the hooks (8), and that the finger (10) is arranged to be movable away from its normal position, in opposition against a restoring force, in order thereby to permit the passage of any tangles/knots in the line (6, 7, 8).

2. A hook catcher according to claim 1, c h a r a c - t e r i s e d  i n  t h a t  the finger (10) is fastened to an arm (20) that is pivotally attached to the base member (2) of the assembly by means of a bearing (21) and a tension spring (22) which constitutes said restoring force.

3. A hook catcher according to claim 2, c h a r a c - t e r i z e d   i n   t h a t   the finger (10) is disposed at the concave lateral surface of a curved, plate-shaped support body (15) which together with an upper portion of the guide plate (11) which projects upwardly beyond the outlet opening (13'), forms an upwardly converging, funnel-shaped continuation of the upper outlet opening (13') of the passage (13), which support body (15) is secured to the pivotable arm (20).

4. A hook catcher according to claim 1, c h a r a c - t e r i z e d   i n   t h a t   the guide plate (11) is hinged (11') at the lower edge thereof to the base member (2').

5. A hook catcher according to claim 1, c h a r a c - t e r i z e d   i n   t h a t   the finger (10) is fastened to the support body (15) by means of a fastening plate (15") whose lower edge (15"') inclines upwardly and terminates in a helical edge (10') of the finger.

6. A hook catcher according to claims 1 and 3, c h a r a c t e r i z e d   i n   t h a t   the outer tip (10") of the finger (10) projects outwardly beyond the lower edge (9') of the hook guide (9).

7. A hook catcher according to claim 6, c h a r a c - t e r i z e d   i n   t h a t   the axis of pivot (A) of the finger (10) (i.e., the support axis for the arm 20) is disposed perpendicularly in relation to the extension (9") of the hook guide (9).

8. A hook catcher according to claim 4, c h a r a c - t e r i z e d   i n   t h a t   the guide plate (11) is biased by means of a spring (23) toward a normal position, which is adjustable in a manner known per se in relation to the lower edge (9') of the hook guide (9).

0082126

Fig. 1.

2/3

Fig. 2a.

Fig. 2b.

Fig. 3a.

Fig. 3b.

European Patent Office

**EUROPEAN SEARCH REPORT**

Application number

EP 82 85 0256

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A-1 348 649 (VARTDAL) <br> *The whole document* | 1 | A 01 K 91/06 <br> A 01 K 79/00 |
| A | US-A-2 670 556 (HOPKINS) <br><br> *Column 7, lines 34-75; column 8, lines 1-31; figures 5,6,7,8,9* | | |
| A | US-A-3 377 733 (GODO) | | |

TECHNICAL FIELDS SEARCHED (Int. Cl. ³)

A 01 K

The present search report has been drawn up for all claims

| Place of search | Date of completion of the search | Examiner |
|---|---|---|
| THE HAGUE | 11-03-1983 | VERDOODT S.J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82